# EUROPEAN PATENT SPECIFICATION

(11) **EP 0 683 185 B1**
(45) Date of publication and mention of the grant of the patent: **31.03.1999**
(21) Application number: 95107744.5
(22) Date of filing: 19.05.1995
(51) Int. Cl.: C08F 220/26, C08L 33/14, C08F 220/28

(54) **(Meth)acrylate copolymer and elastomer compositions comprising said copolymer**
(Meth)acrylat Copolymer und Elastomerzusammensetzungen, die dieses Copolymer enthalten
Copolymère de (meth)acrylate et compositions élastomères contenant ce copolymère

(30) Priority: 20.05.1994 JP 106654/94; 08.03.1995 JP 48220/95
(43) Date of publication of application: 22.11.1995
(73) Proprietor: SUMITOMO CHEMICAL COMPANY LIMITED, Osaka-shi, Osaka 541-0041 (JP)
(72) Inventor: Yamamoto, Keisaku, Ichihara-shi, Chiba-ken (JP); Ikeda, Kiyoshi, Ichihara-shi, Chiba-ken (JP); Fukuyama, Masahiro, 98 Daijuku, Sodegaura-shi, Chiba-ken (JP); Nishiyama, Tadaaki, Ichihara-shi, Chiba-ken (JP)
(74) Representative: VOSSIUS & PARTNER

(56) References cited:
- EP-A- 0 367 577

## Description

The present invention relates to a (meth)acrylate copolymer and an elastomer composition comprising said (meth)acrylate copolymer.

It has been well known that the so-called acrylic rubber comprising a (meth)acrylate copolymer has good heat resistance and good oil resistance.

However, the demanded level of heat resistance and oil resistance is quite high and a high level of low temperature resistance is also demanded recently.

As oil resistance and low temperature resistance are inconsistant properties in acrylic rubber, it is very difficult to improve both oil resistance and low temperature resistance at the same time.

For example, acrylic rubber produced by using a copolymer having ester groups as one component has low temperature resistance but does not necessarily have enough oil resistance (Japanese Patent Unexamined Publication No. 209907 / 1990) .

EP 0 367 577 relates to an ester group-containing (meth)acrylic acid ester represented by the generai formula (I): 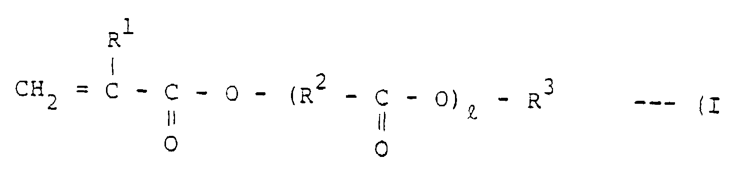 wherein R¹ is a hydrogen atom or a methyl group, R² is a C₃₋₂₀alkylene group, R¹ is a C₁₋₂₀hydrocarbon group or its derivative, and ℓ is an integer of 1-20. and a (co)polymer composed of said ester group-containing (meth)acrylic acid ester and other monomer(s) copolymerizable therewith. This (co)polymer gives a crosslinked product superior in heat resistance, low-temperature resistance and oil resistance.

For example, acrylic rubber produced by using a copolymer having ether bonds (that is, alkoxy groups) as one component has oil resistance and low temperature resistance but has poor heat resistance (refer to Journal of The Society of Rubber Industry, Japan Vol. 53 (6) 367 (1980)).

Accordingly, it is highly desired to develop a copolymer from which an acrylic rubber having both good oil resistance and good low temperature resistance, which are inconsistant properties, and having heat resistance maintained at a high level can be obtained.

An object of the present invention is to provide copolymer from which an acrylic rubber having both good oil resistance and good low temperature resistance, which are inconsistant properties, and having heat resistance maintained at a high level, can be obtained.

This object could be achieved on the basis of the finding that an acrylic rubber having both good oil resistance and good low temperature resistance, and having heat resistance maintained at a high level can be obtained using a (meth)acrylate copolymer having a specific structure.

According to the present invention, there is provided a (meth)acrylate copolymer comprising 80.0 to 99.9 % by weight of a (meth)acrylate monomer having a structure represented by the following formula (1) or a mixture of said (meth)acrylate monomer and an alkyl acrylate having an alkyl ester group comprising an alcohol of 1 to 8 carbon atoms, and 20.0 to 0.1 % by weight of a crosslinking monomer copolymerizable with the said (meth)acrylate monomer. 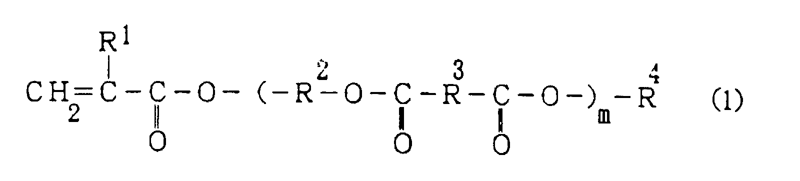 ( In the formula, R¹ represents a hydrogen atom or a methyl group, R² and R³ independently represent an alkylene group having 1 to 20 carbon atoms, a phenylene group or a cyclohexanylene group, R⁴ represents an alkyl group having 1 to 20 carbon atoms, a phenyl group or a derivative thereof and m represents an integer of 1 to 10.) Preferred embodiments are mentioned in claims 2 to 12.

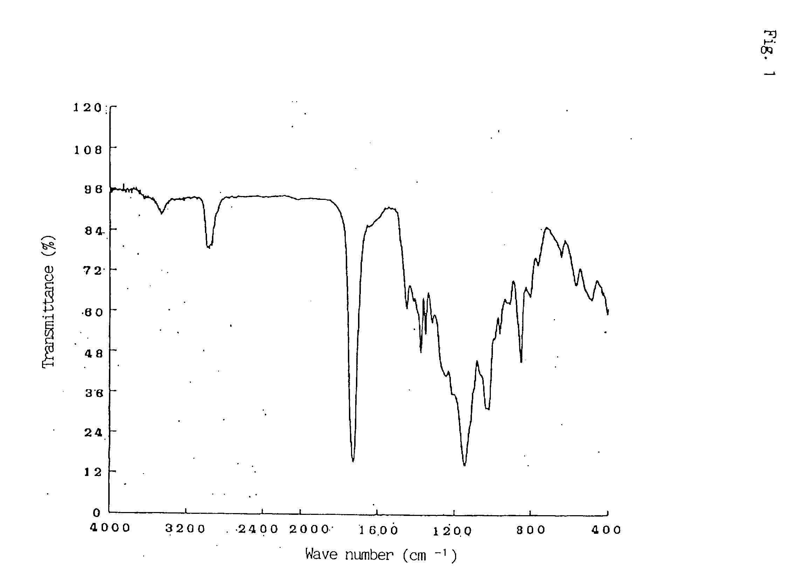

Figure 1 shows an infra-red absorption spectrum of the copolymer obtained in Example 1.

The (meth)acrylate copolymer of the present invention has a (meth)acrylate unit having the structure represented by the above-mentioned formula (1) as one constituent component.

The most characteristic point of the present invention is that the (meth)acrylate copolymer of the present invention has the following structure as one constituent component.
That is, it is important that the carbonyl groups of the two ester structures in the repeating unit 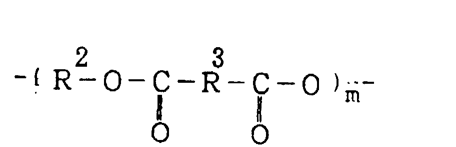 are linked to the residue R³. If this condition is not satisfied, it is difficult to achieve the purpose of the present invention completely.

In the (meth)acrylate copolymer of the present invention, R¹ represents a hydrogen atom or a methyl group, so that the (meth)acrylate copolymer of the present invention is an acrylate copolymer or a methacrylate copolymer.

R² and R³ indepedently represent an alkylene group having 1 to 20 carbon atoms, a phenylene group or a cyclohexanylene group.

Examples of an alkylene group having 1 to 20 carbon atoms are a methylene group, ethylene group, n-propylene group, iso-propylene group and n-butylene group.

An alkylene group having 1 to 10 carbon atoms is preferable, and the ethylene group having 2 carbon atoms is most preferable because an excellent balance of good oil resistance and good low-temperature resistance can be achieved.

When the number of carbon atoms is over 20, oil resistance becomes poor.

Examples of a phenylene group are the o-phenylene group, m-phenylene group and p-phenylene group.

Examples of a cyclohexanylene group are the o-cyclohexanylene p-cyclohexanylene group, m-cyclohexanylene group and p-cyclohexanylene group.

When R² and R³ are both alkylene groups, the total number of carbon atoms is preferably 2 to 20, more preferably 2 to 10, most preferably 4 to 9, in order to achieve good oil resistance and good low temperature resistance at a high level.

R⁴ represents an alkyl group having 1 to 20 carbon atoms, a phenyl group or a derivative thereof.

Examples of an alkyl group having 1 to 20 carbon atoms are the methyl group, ethyl group, n-propyl group and n-butyl group.

An alkyl group having 1 to 10 carbon atoms is preferable, and the ethyl group having 2 carbon atoms is most preferable because an excellent balance of good oil resistance and good low-temperature resistance can be achieved.

When the number of carbon atoms is over 20, oil resistance becomes poor.

Examples of the derivative of a phenyl group are the benzyl group, 2-methyl phenyl group, 3-methyl phenyl group and 4-methyl phenyl group.

m represents an integer of 1 to 10, preferably 1 to 5, more preferably 1.

When m is over 10, production cost is excessive.

As the (meth)acrylate copolymer represented by formula (1), for example, the compounds represented by the following formulae are exemplified.

These compounds may be used independently or as a mixture thereof.
CH₂=CHCOO-C₂H₄-OCO-C₂H₄-COO-CH₃
CH₂=CHCOO-C₂H₄-OCO-C₂H₄-COO-C₂ H₅
CH₂=CHCOO-C₂H₄-OCO-C₂H₄-COO-C₄H₉ 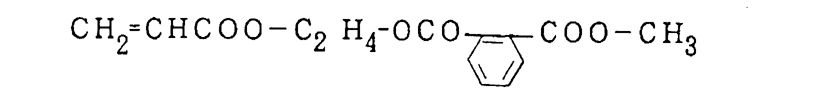 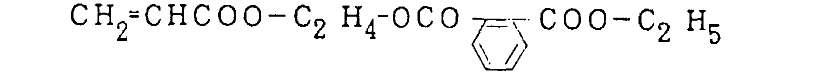 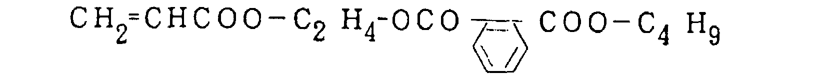 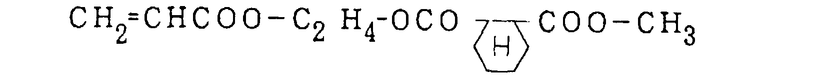 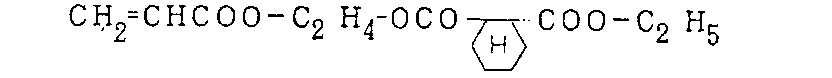 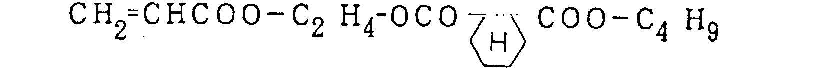 CH₂=CHCOO-C₃H₆-OCO-C₂H₄-COO-CH₃
CH₂=CHCOO-C₃H₆-OCO-C₂H₄-COO-C₂H₅
CH₂=CHCOO-C₃H₆-OCO-C₂H₄-COO-C₄H₉

Examples of alkyl acrylates having an alkyl ester group comprising an alcohol of 1 to 8 carbon atoms, which may be used for mixing with the (meth)acrylate monomer are methyl acrylate, ethyl acrylate, n-propyl acrylate, iso-propyl acrylate, n-butyl acrylate, iso-butyl acrylate, n-amyl acrylate, n-hexyl acrylate, 2-ethylhexyl acrylate and n-octyl acrylate.

Among them, ethyl acrylate, n-butyl acrylate and iso-butyl acrylate are preferably used, especially n-butyl acrylate

These acrylates may be used independently or as a mixture thereof.

Examples of the crosslinking monomer copolymerizable with the (meth)acrylate monomer are diene monomers, unsaturated carboxylate monomers containing an unsaturated group, vinyl monomers containing an epoxy group, vinyl monomers containing a carboxyl group, vinyl monomers containing an active halogen atom, vinyl monomers containing a hydroxyl group and vinyl monomers containing an amide group.

Examples of the diene monomer are butadiene, ethylidene norbornene, isoprene, piperylene, divinylbenzene, vinylcyclohexene, chloroprene, methylbutadiene, cyclopentadiene, methylpentadiene and dimethylvinylstyrylsilane.

Examples of the unsaturated carboxylate monomer containing an unsaturated group are ethylene glycol di(meth)acrylate, propylene glycol di(meth)acrylate, dihydrodicyclopentadienyl (meth)acrylate, dihydrodicyclopentadienyloxyethyl (meth)acrylate, vinyl (meth)acrylate and dimethylvinylmethacryloxymethylsilane.

Examples of the vinyl monomer containing an epoxy group are glycidyl (meth)acrylate and allylglycidyl ether.

Examples of the vinyl monomer containing a carboxyl group are (meth)acrylic acid, itaconic acid , mono n-butyl fumarate, mono ethyl maleate, mono n-butyl maleate, 2-methacryloyloxyethyl succinate, 2-methacryloyloxyethyl phthalate, 2-methacryloyloxyethyl hexahydrophthalate and 2-methacryloyloxyethyl maleate.

Examples of the vinyl monomer containing an active halogen atom are 2-chloroethyl vinyl ether, vinyl chloroacetate and allyl chloroacetate.

Examples of the vinyl monomer containing a hydroxyl group are 2-hydroxyethyl acrylate, 2-hydroxypropyl methacrylate, 2-hydroxyethyl methacrylate and N-methylol (meth) (meth)acrylamide.

Examples of the vinyl monomer containing an amide group are acrylamide and methacrylamide.

The above-mentioned monomers may be used independently or as a mixture thereof.

The (meth)acrylate copolymer of the present invention comprises 80.0 to 99.9 % by weight, preferably 90.0 to 99.5 % by weight of the above-mentioned (meth)acrylate represented by structure (1) or of the mixture of said (meth)acrylate monomer and an alkyl acrylate having an alkyl ester group comprising an alcohol of 1 to 8 carbon atoms, and 20.0 to 0.1 % by weight, preferably 10.0 to 0.5 % by weight of a crosslinking monomer copolymerizable with said (meth) acrylate monomer.

When the content of said crosslinking monomer is less than 0.1 % by weight, there is almost no crosslinking.

When the content of said crosslinking monomer is over 20.0 % by weight, tensile elongation of the vulcanized products becomes poor.

When the (meth)acrylate copolymer is the mixture of said (meth)acrylate monomer and an alkyl acrylate having an alkyl ester group comprising an alcohol of 1 to 8 carbon atoms, the content of said alkyl acrylate is 5.0 to 94.9% by weight, preferably 10.0 to 89.5% by weight of the total amount of (meth)acrylate monomer plus alkyl acrylate.

When the (meth)acrylate copolymer is the mixture of said (meth)acrylate monomer and n-butyl acrylate, the content of n-butyl acrylate is preferably 5 to 50 % by weight, more preferably 10 to 40 % by weight.

By addition of an alkyl acrylate in the above-mentioned range, mechanical properties such as tensile strength, of the vulcanized rubber obtained by vulcanization of the (meth)acrylate copolymer can be further improved.

Viscosity average molecular weight of the (meth)acrylate copolymer of the present invention is usually 10 000 to 5 000 000, preferably 100 000 to 3 000 000.

When the said molecular weight is less than 10 000 the tensile strength of the vulcanized products may be insufficient.

When the said molecular weight is over 5 000 000, processability may become worse in some cases.

The (meth)acrylate copolymer of the present invention can be prepared by usual methods such as bulk polymerization, emulsion polymerization or solution polymerization by using a free-radical initiator.

As a representative polymerization procedure, emulsion polymerization is exemplified.

Examples of an emulsifier for producing the (meth)acrylate copolymer by emulsion polymerization are alkyl sulfates, alkyl aryl sulfonates and higher fatty acid salts.

The polymerization reaction temperature is, usually, 0 to 90°C, preferably 3 to 80°C.

Examples of a radical initiator to start polymerization reaction are organic peroxides such as benzoylperoxide, cumenehydroperoxide and para-menthanehydroperoxide, azo compounds represented by azobisisobutylonitrile, inorganic persulfuric acid salts such as potassium persulfate and ammonium persulfate, and redox catalysts represented by the combination of an organic peroxide and iron sulfate.

The amount of these radical initiators used is, usually, 0.01 to 2 % by weight of the mixture of monomers.

A molecular weight modifier is used in accordance with its necessity, and examples of molecular weight modifiers are t-dodecylmercaptane and dimethylxanthogen disulfide.

After arriving at the intended polymerization conversion, polymerization reaction is stopped by adding a terminator such as N,N-diethylhydroxylamine to obtain a latex.

Next, unreacted monomer in the obtained latex is removed, for example by steam distillation.

After adding an antioxidant such as a phenol or an amine and coagulating the latex by mixing with an aqueous solution of a metal salt such as aluminum sulfate or calcium sulfate,
the (meth)acrylate copolymer can be obtained by drying the coagulated latex.

Next, the elastomer composition of the present ivention is illustrated.

The elastomer composition of the present invention comprises the above-mentioned (meth)acrylate copolymer, carbon black and a crosslinking agent.

The amount of carbon black used in this composition is 5 to 400 parts by weight, preferably 10 to 200 parts by weight per 100 parts by weight of (meth)acrylate copolymer.

When the said amount is less than 5 parts by weight, an adequate reinforcing effect cannot be obtained.

When the said amount is over 400 parts by weight, the viscosity of the elastomer composition raises and its processability becomes poor.

The amount of crosslinking agent used in the elastomer composition is 0.1 to 20 parts by weight, preferably 0.2 to 10 parts by weight per 100 parts by weight of (meth)acrylate copolymer.

When the said amount is less than 0.1 parts by weight, there is almost no vulcanization.

When the said amount is over 10 parts by weight, mechanical properties of the vulcanized products becomes poor.

The crosslinking agent is selected in accordance with the above-mentioned crosslinking monomer as follows.

Examples of crosslinking agents in case of using a diene monomer and/or unsaturated carboxylate monomer containing an unsaturated group as crosslinking monomer, are sulfur, organic compounds containing sulfur and organic peroxides.

Examples of crosslinking agents in case of using a vinyl monomer containing an epoxy group as crosslinking monomer, are polyamines, polycarboxylic acids, acid anhydrides, polyfunctional organic acids, polyamides, sulfonamides, dithiocarbamic acid salts and ammonium organic carboxylates.

Examples of crosslinking agents in case of using a vinyl monomer containing a carboxyl group as crosslinking monomer, are polyamines, polyepoxides and polyols.

Examples of crosslinking agents in case of using a vinyl monomer containing an active halogen atom as crosslinking monomer, are metal soaps, ammonium organic carboxylates, polyamines and polycarbamates.

Examples of crosslinking agents in case of using a vinyl monomer containing a hydroxyl group as crosslinking monomer, are polyisocyanates, polycarboxylic acids and alkoxymethyl melamines.

An sample of crosslinking agents in case of using a vinyl monomer containing an amide group as crosslinking monomer, is aminoformaldehyde.

Among these crosslinking agents, powdered sulfur, precipitated sulfur, colloidal sulfur, insoluble sulfur, high-dispersed sulfur can be used as sulfur.

As organic compound containing sulfur, a compound providing active sulfur by thermal dissociation such as tetramethylthiuram disulfide and 4,4'-dithiomorpholine which are thiuram accelerators can be used without limitation.

As organic peroxides, e.g. 2,5-dimethyl-2,5-di(t-butylperoxy) hexyne, 2,5-dimethyl-2,5-di(t-butylperoxy)hexane, 1,3-bis(t-butylperoxyisopropyl)benzene, dicumylperoxide, dibutylperoxide, 1,1-di-t-butylperoxy-3,3,5-trimethylcyclohexane, t-butylcumylperoxide and t-butylperoxyisopropylcarbonate can be used.

As polyamine, e.g. triethylenetetramine, methylenedianiline, and diethylenetriamine can be used.

As polycarboxylic acid, e.g. adipic acid and octadecyl dicarboxylic acid can be used.

As acid anhydride, e.g. pyromellitic anhydride, maleic anhydride and dodecenyl succinic anhydride can be used.

As polyfunctional organic acid, e.g. isocyanuric acid can be used.

As dithiocarbamic acid salt, e.g hexamethylenediaminecarbamate and zinc dimethyldithiocarbamate can be used.

As ammonium organic carboxylate, e.g. ammonium benzoate and ammonium adipate can be used.

As polyepoxide, e.g. ethylene glycol diglycidyl ether and 1,6-hexanediol diglycidyl ether can be used.

As polyol, e.g. 1,4-butanediol and 1,1,1-trimethylolpropane can be used.

As metal soap, e.g. sodium stearate and potassium stearate can be used.

As polyisocyanate, e.g. hexamethylene diisocyanate, tolylene diisocyanate and diphenylmethane diisocyanate can be used.

A crosslinking coagent can be added to these crosslinking agents in order to shorten vulcanization time, drop vulcanization temperature and achieve improved properties of the vulcanized products.

For example, in case of using sulfur as crosslinking agent, thiazols such as mercaptobenzothiazol, thiurams such as tetramethylthiuram disulfide, guanidines such as diphenyl guanidine, or dithiocarbamic acid salts such as zinc dimethyldithio carbamate can be used effectively as the crosslinking coagent.

In case of using organic peroxides as crosslinking agent, ethyleneglycol dimethacrylate, 1,3-butanediol dimethacrylate, 1,4-butanediol di(meth)acrylate, 1,6-hexanediol di(meth) acrylate, polyethyleneglycol dimethacrylate, 2,2'-bis(4-methacryloyl diethoxyphenyl)propane, trimethylolpropane tri(meth)acrylate, pentaerythritol triacrylate, divinylbenzene, N,N'-methylenebisacrylamide, p-quinonedioxime, p,p'-dibenzoyl quinonedioxime, triazine dithiol, triallyl cyanurate, triallyl isocyanurate, bismaleimide or silicon oil having a high content of vinyl groups can be used effectively as the crosslinking coagent.

In case of using a metal soap as crosslinking agent, sulfur and dipentamethylenethiuram tetrasufide can be used effectively as a crosslinking coagent.

In case of using polyamines as crosslinking agent, diphenyl guanidine and diorthotolyl guanidine can be used effectively as a crosslinking coagent.

In the elastomer composition of the present invention, plasticizer and a processing aid is preferably used in addition to above-mentioned components.

The amount of the plasicizer used is usually 200 parts by weight or less, preferably 3 to 100 parts by weight per 100 parts by weight of the (meth)acrylate copolymer.
By using a plasticizer within above-mentioned range, low temperature resistance of the vulcanized products can be further improved.

When the amount of the plasticizer used is over 200 parts by weight, mechanical properties of the vulcanized products may become poor.
Examples of plasticizers are fumaric acid derivatives, adipic acid derivatives and polyetherester.

The amount of processing aid used is usually 20 parts by weight or less, preferably 0.3 to 10 parts by weight per 100 parts by weight of the (meth)acrylate copolymer.

By using a processing aid within above-mentioned range, the composition can be prevented from adhering at a processing machine.

When the amount of the processing aid used is over 20 parts by weight, lubricity is too high and processing may become difficult.

Examples of processing aids are higher fatty acids and their metal salts or amide salts.

The elastomer composition of the present invention can be obtained, for example, by the following method.

The elastomer composition of the present invention can be obtained by blending the components,
if necessary, with well-known antioxidants, vulcanization accelerators, zinc oxide, reinforcing agents, fillers, and softeners by using conventional kneading machines such as a mixing roll or an internal mixer.

Besides, the said elastomer composition is molded to a desired shape in accordance with the purpose and the molded vulcanized rubber composition can be obtained through a vulcanization process.

The primary vulcanization is performed usually by heating for 1 to 30 minutes at 120 °C or more, preferably 150 to 220 °C under a pressure of 50 to 150 kg/cm².

After vulcanization is performed by heating for 1 to 20 hours at 150 to 200°C, in accordance with necessity.

The (meth)acrylate copolymer and its elastomer composition of the present invention having good low temperature resistance, good oil resistance and heat resistance maintained at a high level can be used for various kinds of sealing materials (e.g. gasket, o-ring, packing and oil seal) or e.g. as hose, belt or roll.

The present invention is illustrated by examples.

### Example 1

200 g of unsaturated carboxylic acid having the formula CH₂=CHCOOC₂H₄OCOC₂H₄COOH, 400 g of ethyl alcohol, 300 ml of toluene and 1 ml of sulfuric acid were fed in a flask with a stirrer and a Dean-Stark water separator.

Next, reflux by heating was performed and the produced water was removed from the water separator.

After 3 hours, heating was stopped and the flask cooled to the room temperature, the reaction mixture in the flask was washed with 500 ml of water, 500 ml of 5 % aqueous sodium hydrogen carbonate solution and 500 ml of 10% aqueous sodium chloride solution in this order.

After the oil layer was dried with anhydrous sodium sulfate, it was distilled under reduced pressure (b.p. 142°C/266 Pa [142°C/2 mmHg]) after adding the polymerization inhibitor BHT.
A colorless transparent liquid poduct was obtained at a conversion rate of 42 %. This product was analysed using an Infra-Red Spectrophotometer (1720 X manufactured by Perkin Elmer Company) . It is designated "acrylate A" wherein in formula (1) R¹ is a hydrogen atom, R² and R³ are an ethylene group, R⁴ is an ethyl group, and m is equal to 1.

Next , 95 parts by weight of the obtained acrylate A, 5 parts by weight of glycidyl methacrylate, 200 parts by weight of water, 4 parts by weight of sodium lauryl sulfate, 0.25 parts by weight of ammonium persulfate and 0.30 parts by weight of iron sulfate were fed in an autoclave under nitrogen and continued stirring at a reaction temperature of 5°C. After 6 hours, 0.5 parts by weight of N,N-diethylhydroxylamine were added and the reaction was stopped.

Next, unreacted monomer was removed from the product by steam-flocking. 0.25 % by weight of aqueous calcium chloride solution was added to the obtained latex and the latex was coagulated.
The coagulated mass was washed fully with water and dried at 50°C for 4 hours to obtain a copolymer.

The obtained copolymer comprised 97.0 % by weight of the acrylate A having a structure represented by formula (1) (R¹ is a hydrogen atom, R² and R³ are ethylene groups, R⁴ is an ethyl group, and m is equal to 1 ) and 3.0 % by weight of glycidyl methacrylate as a crosslinking monomer copolymerizable with acrylate A.

Its viscosity average molecular weight was 197 000 (Intrinsic viscosity (η) was 1.25 dl/g). Infra-red spectrum of the obtained copolymer is shown in figure 1.

Infra-red analysis of the obtained copolymer was measured by the attenuated total reflection method using an Infra-Red Spectrophotometer (1720 X manufactured by Perkin Elmer Company).

Intrinsic viscosity was measured with an Ubbelohde viscometer at 30°C after dissolving the copolymer in chloroform. Viscosity average molecular weight Mv of the copolymer was calculated from the following equation (refer to Polymer Handbook, Third Edition, VII-8, J. Brandrup, E.H. Immergut, A Wiley-Interscience Publication (1989)).${\text{[η] = 31.4×10}}^{\text{-3}} {\text{· Mv}}^{\text{0·68}} \text{(ml/g)}$

Next, 40 parts by weight of FEF carbon black (Seast® SO manufactured by Tokai Carbon Company), 1 part by weight of stearic acid , 0.5 part by weight of stearyl amine, 2 parts by weight of Nauguard® 445 (amine antioxidant manufactured by Uniroyal Company), and as the crosslinking agent and crosslinking coagents, 0.8 parts by weight of isocyanuric acid, 1.5 parts by weight of octadecyltrimethylammonium bromide and 2.3 parts by weight of diphenylurea were added per 100 parts by weight of the copolymer and the mixture was kneaded with a 15.24 cm (6 inches) mixing roll.

The optimum curing time of the composition was measured under the condition of 170°C with an oscillating disc rheometer manufactured by Toyo Seiki Company.

The composition was vulcanized under the condition of 170°C ×30 minutes, and oil resistance and low temperature resistance of the obtained vulcanized rubber were measured according to JIS K6301 (ASTM D471, D1053). As a result, the low temperature resistance (T₁₀) was -24 °C and oil resistance (Volume swell) was 0.7 %.

Low temperature resistance test was performed by Gehman torsion test and oil resistance test was performed under the condition of 150°C×70 hrs by using JIS No.3 oil (ASTM No. 3 oil).

### Examples 2-7

In a similar manner as Example 1, Examples 2-7 were performed under the conditions listed in Tables 1 and 2.

### Comparative Example 1

In a similar manner as Example 1 except that a commercial acrylic rubber (comprising 98.6% by weight of ethyl acrylate and 1.4 % by weight of glycidyl methacrylate and having a viscosity average molecular weight of 651 000 (intrinsic viscosity [η] of 2.83 dl/g)) was used.

As a result of evaluating its property, low temperature resistance (T₁₀) was -12°C and oil resistance (Volume swell) was 12.4 %.

### Comparative Examples 2-3

In a similar manner as Comparative Example 1 Comparative Examples 2-3 were performed under the conditions listed in Table 2.

**Table 1**

| | Examples | | | | |
|---|---|---|---|---|---|
| | 1 | 2 | 3 | 4 | 5 |
| Composition of the copolymer (wt%) | | | | | |
| ethyl acrylate | 0 | 48.0 | 29.0 | 15.0 | 0 |
| n-butyl acrylate | 0 | 0 | 0 | 0 | 49.5 |
| acrylate A | 97.0 | 49.0 | 68.0 | 82.0 | 49.5 |
| glycidyl methacrylate | 3.0 | 3.0 | 3.0 | 3.0 | 3.0 |
| Intrinsic viscosity [η] (dl/g) | 1.25 | 2.08 | 1.07 | 1.12 | 2.06 |
| Viscosity average molecular weight (Mv) (x 1000) | 197 | 416 | 157 | 167 | 410 |

| Properties of vulcanized product | | | | | |
|---|---|---|---|---|---|
| Low temperature resistance Gehman torsion test (T₁₀)(°C) | -24 | -20 | -22 | -24 | -37 |
| Oil resistance (Volume swell) | 0.7 | 6.3 | 1.0 | -0.7 | 36.2 |

**Table 2**

| | Example | | Comparative Example | | |
|---|---|---|---|---|---|
| | 6 | 7 | 1 | 2 | 3 |
| Composition of the copolymer (wt%) | | | | | |
| ethyl acrylate | 0 | 0 | 98.6 | 0 | 48.0 |
| n-butyl acrylate | 29.0 | 15.0 | 0 | 97.0 | 49.0 |
| acrylate A | 68.0 | 82.0 | 0 | 0 | 0 |
| glycidyl methacrylate | 3.0 | 3.0 | 1.4 | 3.0 | 3.0 |
| Intrinsic viscosity [η] (dl/g) | 1.27 | 1.14 | 2.83 | 1.83 | 2.07 |
| Viscosity average molecular weight (Mv) (x 1000) | 201 | 172 | 651 | 345 | 413 |

| Properties of vulcanized product | | | | | |
|---|---|---|---|---|---|
| Low temperature resistance Gehman torsion test (T₁₀)(°C) | -29 | -28 | -12 | -46 | -30 |
| Oil resistance (Volume swell) | 4.2 | 1.0 | 12.4 | 83.6 | 39.3 |

## Claims

1. A (meth)acrylate copolymer comprising 80.0 to 99.9 % by weight of a (meth)acrylate monomer having a structure represented by the following formula (1) or a mixture of said (meth)acrylate monomer and an alkyl acrylate having an alkyl ester group comprising an alcohol of 1 to 8 carbon atoms, and 20.0 to 0.1 % by weight of a crosslinking monomer copolymerizable with the said (meth)acrylate monomer 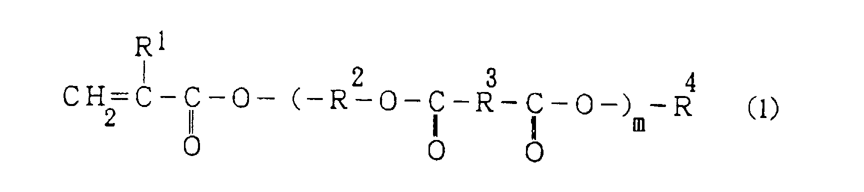 wherein R¹ represents a hydrogen atom or a methyl group, R² and R³ independently represent an alkylene group having 1 to 20 carbon atoms, a phenylene group or a cyclohexanylene group, R⁴ represents an alkyl group having 1 to 20 carbon atoms, a phenyl group or a derivative thereof and m represents an integer of 1 to 10.

2. A (meth)acrylate copolymer according to claim 1, wherein the content of alkyl acrylate having an alkyl ester group comprising an alcohol of 1 to 8 carbon atoms is 5.0 to 94.9 % by weight of the total amount of (meth)acrylate monomer plus alkyl acrylate.

3. A (meth)acrylate copolymer according to claim 2, wherein the content of alkyl acrylate having an alkyl ester group comprising an alcohol of 1 to 8 carbon atoms is 10.0 to 89.5% by weight of the total amount of (meth)acrylate monomer plus alkyl acrylate.

4. A (meth)acrylate copolymer according to any one of claims 1 to 3, wherein the alkyl acrylate having an alkyl ester group comprising an alcohol of 1 to 8 carbon atoms is selected from ethyl acrylate, n-butyl acrylate and iso-butyl acrylate.

5. A (meth)acrylate copolymer according to any one of claims 1 to 3, wherein the alkyl acrylate having an alkyl ester group comprising an alcohol of 1 to 8 carbon atoms is n-butyl acrylate.

6. A (meth)acrylate copolymer according to claim 5, wherein the content of n-butyl acrylate is 5 to 50%, by weight.

7. A (meth)acrylate copolymer according to claim 6, wherein the content of n-butyl acrylate is 10 to 40% by weight.

8. A (meth)acrylate copolymer according to any one of claims 1 to 7, wherein the total number cf carbon atoms of R² and R³ is 4 to 9.

9. A (meth)acrylate copolymer according to any one of claims to 8, wherein the viscosity average molecular weight is 10 000 to 5 000 000.

10. A (meth)acrylate copolymer according to any one of claims 1 to 9, wherein m is 1.

11. An elastomer composition comprising 100 parts by weight of a (meth)acrylate copolymer according to any one of claims 1 to 10, 5 to 400 parts by weight of a carbon black and 0.1 to 20 parts by weight of a crosslinking agent.

12. A vulcanized rubber obtainable by vulcanization of the elastomer composition according to claim 11.

## Patentansprüche

1. (Meth)acrylatcopolymer, das 80.0 bis 99.9 Gew.-% eines (Meth)acrylatmonomers mit einer Struktur der folgenden Formel (1) oder ein Gemisch des (Meth)acrylatmonomers und eines Alkylacrylats mit einem Alkylesterrest, der einen Alkohol mit 1 bis 8 Kohlenstoffatomen umfaßt, und 20.0 bis 0.1 Gew.-% eines vernetzenden Monomers, das mit dem (Meth)acrylatmonomer copolymerisierbar ist, umfaßt, 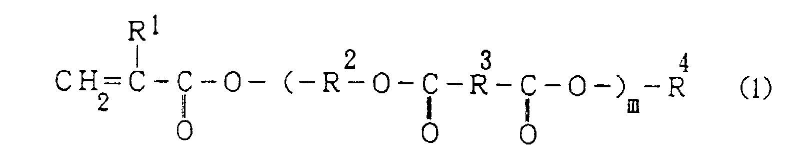 wobei R¹ ein Wasserstoffatom oder eine Methylgruppe darstellt, R² und R³ unabhängig einen Alkylenrest mit 1 bis 20 Kohlenstoffatomen, eine Phenylengruppe oder eine Cyclohexanylengruppe darstellen, R⁴ einen Alkylrest mit 1 bis 20 Kohlenstoffatomen, eine Phenylgruppe oder ein Derivat davon darstellt und m eine ganze Zahl von 1 bis 10 darstellt.

2. (Meth)acrylatcopolymer nach Anspruch 1, in dem der Gehalt des Alkylacrylats mit einem Alkylesterrest, der einen Alkohol mit 1 bis 8 Kohlenstoffatomen umfaßt, 5.0 bis 94.9 Gew.-% der Gesamtmenge des (Meth)acrylatmonomers und des Alkylacrylats beträgt.

3. (Meth)acrylatcopolymer nach Anspruch 2, in dem der Gehalt an Alkylacrylat mit einem Alkylesterrest, der einen Alkohol mit 1 bis 8 Kohlenstoffatomen umfaßt, 10.0 bis 89.5 Gew.-% der Gesamtmenge des (Meth)acrylatmonomers und des Alkylacrylats beträgt.

4. (Meth)acrylatcopolymer nach einem der Ansprüche 1 bis 3, in dem das Alkylacrylat mit einem Alkylesterrest, der einen Alkohol mit 1 bis 8 Kohlenstoffatomen umfaßt, aus Acrylsäureethylester, Acrylsäure-n-butylester und Acrylsäureisobutylester ausgewählt ist.

5. (Meth)acrylatcopolymer nach einem der Ansprüche 1 bis 3, in dem das Alkylacrylat mit einem Alkylesterrest, der einen Alkohol mit 1 bis 8 Kohlenstoffatomen umfaßt, Acrylsäure-n-butylester ist.

6. (Meth)acrylatcopolymer nach Anspruch 5, in dem der Gehalt an Acrylsäure-n-butylester 5 bis 50 Gew.-% beträgt.

7. (Meth)acrylatcopolymer nach Anspruch 6, in dem der Gehalt an Acrylsäure-n-butylester 10 bis 40 Gew.-% beträgt.

8. (Meth)acrylatcopolymer nach einem der Ansprüche 1 bis 7, in dem die Gesamtzahl der Kohlenstoffatome von R² und R³ 4 bis 9 beträgt.

9. (Meth)acrylatcopolymer nach einem der Ansprüche 1 bis 8, in dem das Viskositätsmittel des Molekulargewichts 10000 bis 5000000 beträgt.

10. (Meth)acrylatcopolymer nach einem der Ansprüche 1 bis 9, in dem m 1 ist.

11. Elastomermasse, umfassend 100 Gew.-Teile eines (Meth)acrylatcopolymers nach einem der Ansprüche 1 bis 10, 5 bis 400 Gew.-Teile Ruß und 0.1 bis 20 Gew.-Teile eines Vernetzungsmittels.

12. Vulkanisierter Kautschuk, erhältlich durch Vulkanisation der Elastomermasse nach Anspruch 11.

## Revendications

1. Copolymère de (méth)acrylate comprenant de 80,0 à 99,9 % en poids d'un monomère (méth)acrylate ayant une structure représentée par la formule (1) suivante ou un mélange dudit monomère (méth)acrylate et d'un acrylate d'alkyle ayant un groupe ester alkylique comprenant un alcool de 1 à 8 atomes de carbone, et de 20,0 à 0,1 % en poids d'un monomère de réticulation copolymérisable avec ledit monomère (méth)acrylate, 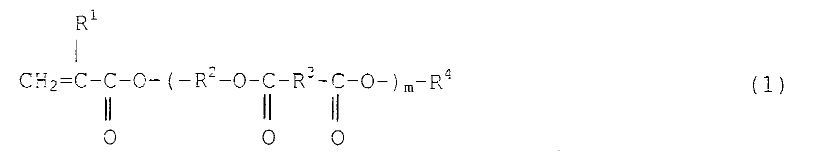 dans laquelle R¹ représente un atome d'hydrogène ou un groupe méthyle, R² et R³ représentent indépendamment un groupe alkylène ayant de 1 à 20 atomes de carbone, un groupe phénylène ou un groupe cyclohexanylène, R⁴ représente un groupe alkyle ayant de 1 à 20 atomes de carbone, un groupe phényle ou un de ses dérivés, et m représente un entier de 1 à 10.

2. Copolymère de (méth)acrylate selon la revendication 1, dans lequel la teneur en acrylate d'alkyle ayant un groupe ester alkylique comprenant un alcool de 1 à 8 atomes de carbone est de 5,0 à 94,9 % en poids par rapport à la quantité totale de monomère (méth)acrylate plus l'acrylate d'alkyle.

3. Copolymère de (méth)acrylate selon la revendication 2, dans Lequel la teneur en acrylate d'alkyle ayant un groupe ester alkylique comprenant un alcool de 1 à 8 atomes de carbone est de 10,0 à 89,5 % en poids par rapport à la quantité totale de monomère (méth)acrylate plus l'acrylate d'alkyle.

4. Copolymère ce (méthacrylate selon l'une quelconque des revendications 1 à 3, dans lequel l'acrylate d'alkyle ayant un groupe ester alkylique comprenant un alcool de 1 à 8 atomes de carbone est choisi parmi l'acrylate d'éthyle, l'acrylate de n-butyle et l'acrylate d'isobutyle.

5. Copolymère de (méth)acrylate selon l'une quelconque des revendications 1 à 3, dans lequel l'acrylate d'alkyle ayant un groupe ester alkylique comprenant un alcool de 1 à 8 atomes de carbone est l'acrylate de n-butyle.

6. Copolymère de (méth)acrylate selon la revendication 5, dans lequel la teneur en acrylate de n-butyle est de 5 à 50 % en poids.

7. Copolymère de (méth)acrylate selon la revendication 6, dans lequel la teneur en acrylate de n-butyle est de 10 à 40 % en poids.

8. Copolymère de (méth)acrylate selon l'une quelconque des revendications 1 à 7, dans lequel le nombre total d'atomes de carbone de R² et R³ est de 4 à 9.

9. Copolymère de (méth)acrylate selon l'une quelconque des revendications 1 à 8, dans Lequel la masse moléculaire moyenne en viscosité est de 10 000 à 5 000 000.

10. Copolymère de (méth)acrylate selon l'une quelconque des revendications 1 à 9, dans lequel m vaut 1.

11. Composition d'élastomère comprenant 100 parties en poids d'un copolymère de (méch)acrylate selon l'une quelconque des revendications 1 à 10, 5 à 400 parties en poids d'un noir de carbone et 0,1 à 20 parties en poids d'un agent de réticulation.

12. Caoutchouc vulcanisé pouvant être obtenu par vulcanisation de la composition d'élastomère selon la revendication 11.
